# EUROPÄISCHE PATENTANMELDUNG

(11) **EP 1 657 843 A1**
(43) Veröffentlichungstag der Anmeldung: **17.05.2006**
(21) Anmeldenummer: 04027103.3
(22) Anmeldetag: 15.11.2004
(51) Int. Cl.: H04L 1/18, H04Q 7/38, H04L 12/28

(54) **Verfahren zum Betrieb einer Funkstation, Funkstation sowie Station für ein Funkkommunikationssystem**

(71) Anmelder: SIEMENS AKTIENGESELLSCHAFT, 80333 München (DE)
(72) Erfinder: Breuer, Volker, 16727 Bötzow (DE); Ulrich, Thomas, 67098 Bad Dürkheim (DE)

(57) **Zusammenfassung**

Das Verfahren zum Betrieb einer Funkstation für ein Funkkommunikationssystem sieht vor, dass eine Funkstation (MS) während eines festgelegten Messzeitraums (M1) Messungen von Empfangssignalen durchführt, der Funkstation (MS) eine Übertragungsressource Arq1 für auszusendende Daten zugeteilt ist und die Funkstation (MS) eine Übertragung von Daten über die Übertragungsressource (Arq1) unterlässt, falls eine zeitliche Überschneidung des Messzeitraums (M1) mit dem Empfang einer Nachricht (ACK1) droht, die die Funkstation (MS) als Folge ihrer unter Nutzung der Übertragungsressource (Arq1) durchgeführten Übertragung von Daten empfangen würde.

## Beschreibung

Die Erfindung betrifft ein Verfahren zum Betrieb einer Funkstation für ein Funkkommunikationssystem, die während eines festgelegten Messzeitraums Messungen von Empfangssignalen durchführt, sowie eine entsprechende Funkstation und eine Station für ein Funkkommunikationssystem, die eine Signalisierung an die Funkstation vornimmt.

In Funkkommunikationssystemen erfolgt eine Übertragung von Daten mittels elektromagnetischer Wellen über eine Luftschnittstelle. Eine Art von Funkkommunikationssystemen sind Mobilfunksysteme, bei denen insbesondere mobile Teilnehmerstationen zum Einsatz kommen. Bekannte Standards für Mobilfunksysteme sind beispielsweise GSM (Global System of Mobile Communication), IS-95, CDMA2000 und UMTS (Universal Mobile Telecommunication System) in seinen Varianten FDD (Frequency Division Duplex) und TDD (Time Division Duplex). Die letztgenannten Mobilfunksysteme sind zellular organisiert, dass heißt sie weisen eine Vielzahl von von Basisstationen versorgte Funkzellen auf, die nebeneinander angeordnet sind und so den gesamten Versorgungsbereich eines Mobilfunksystems abdecken.

Bei zellularen Mobilfunksystemen besteht die Notwendigkeit, dass eine Teilnehmerstation in bestimmten Situationen Messungen von Empfangssignalen durchführt, die von benachbarten Funkzellen ausgesendet werden. Diese Messungen dienen zur Vorbereitung eines möglichen Zellwechsels, da durch sie festgestellt werden kann, die Signale welcher Funkzelle von der Teilnehmerstation jeweils am besten empfangen werden können. Nach dem UMTS-Standard erfolgen solche Messungen auch während einer bestehenden Verbindung zur Teilnehmerstation. Zur Durchführung der Messungen sind jeder Teilnehmerstation bestimmte Messzeiträume zugeordnet. Diese Messzeiträume sind auch netzseitig bekannt. Das Netz unterlässt eine Übertragung von Daten an die Teilnehmerstation während dieser Messzeiträume. Täte sie dies nicht, würden die entsprechenden Daten nicht von der Teilnehmerstation empfangen werden können, da sie nur einen Empfänger aufweist, der zur Durchführung der Messungen während der Messzeiträume auf die Frequenzen der jeweils auszumessenden Empfangssignale eingestellt wird und nicht gleichzeitig im Frequenzbereich, den die bestehende Verbindung zur Teilnehmerstation nutzt, empfangen kann. Die erforderlichen Übertragungspausen im Downlink, dass heißt in der Übertragungsrichtung von einer Basisstation zur Teilnehmerstation, während der Messzeiträume der Teilnehmerstation werden nach dem UMTS-Standard durch den so genannten compressed mode erreicht, dass heißt in einem Übertragungsrahmen erfolgt vor und nach dem Messzeitraum jeweils eine komprimierte Übertragung von Daten im Downlink, so dass trotz der Übertragungsunterbrechung während des Messzeitraums die Datenrate konstant gehalten werden kann.

Derzeit wird für den UMTS-Standard die Einführung eines hochdatenratigen Uplink- (Übertragungsrichtung von einer Teilnehmerstation zur Basisstation) Kanals diskutiert, dem so genannten EDCH (Enhanced Dedicated Channel), auch als ECH abgekürzt. Für diesen ist es vorgesehen, dass über einen Zuteilungskanal im Downlink einer Gruppe von Teilnehmerstationen oder auch einzelnen Teilnehmerstationen Übertragungsressourcen auf dem EDCH zugeteilt werden. Bei Bedarf kann dann eine Teilnehmerstation, der auf diesem Wege eine Übertragungsressource zugeteilt worden ist, auf dem EDCH Daten im Uplink übertragen. Da in der Regel mehreren Teilnehmerstationen gleichzeitig dieselbe Übertragungsressource zugeteilt wird, kann es geschehen, dass es zu Kollisionen beim Zugriff auf die zugeteilte Übertragungsressource kommt. Um dies zu erkennen, ist es vorgesehen, ein HARQ-(Hybrid Automatic Repeat Request) Protokoll zu verwenden, bei dem netzseitig im Falle einer erfolgreichen Übertragung im Uplink ein Acknowledge-Signal zur Teilnehmerstation übertragen wird. Kommt es nun zu einer Kollision beim Zugriff mehrerer Teilnehmerstationen auf die gleiche Übertragungsressource auf dem EDCH, kann netzseitig kein fehlerfreier Empfang der unterschiedlichen Daten der beteiligten Teilnehmerstationen erfolgen, so das kein Acknowledge-Signal gesendet wird. Hieran erkennen die beteiligten Teilnehmerstationen die aufgetretene Kollision und können entsprechend zu einem späteren Zeitpunkt erneut eine Übertragung versuchen. Für den EDCH soll ein synchrones HARQ-Protokoll verwendet werden, dass heißt die Acknowledgement-Signale werden in einem definierten Zeitraster nach Erhalt der entsprechenden Daten im Uplink zur Teilnehmerstation übertragen.

Der Erfindung liegt die Aufgabe zugrunde, einen vorteilhaften Betrieb einer Funkstation eines Funkkommunikationssystems zu ermöglichen, beim dem die Funkstation Messungen von Empfangssignalen durchführt und der Funkstation eine Übertragungsressource für auszusendende Daten zugeteilt ist.

Diese Aufgabe wird mit dem Verfahren zum Betrieb einer Funkstation, einer Funkstation für ein Funkkommunikationssystem und einer Station für ein Funkkommunikationssystem gemäß den unabhängigen Patentansprüchen gelöst. Vorteilhafte Ausführungsformen und Weiterbildungen der Erfindung sind Gegenstand abhängiger Ansprüche.

Beim erfindungsgemäßen Verfahren zum Betrieb einer Funkstation für ein Funkkommunikationssystem führt eine Funkstation während eines festgelegten Messzeitraumes Messungen von Empfangssignalen durch. Weiterhin ist der Funkstation eine Übertragungsressource für auszusendende Daten zugeteilt. Die Funkstation unterlässt eine Übertragung von Daten über die Übertragungsressource, falls eine zeitliche Überschneidung des Messzeitraums mit dem Empfang einer Nachricht droht, die die Funkstation als Folge ihrer unter Nutzung der Übertragungsressource durchgeführten Übertragung von Daten empfangen würde.

Die Erfindung beruht auf der Erkenntnis, dass es in Funkkommunikationssystemen, bei denen eine Funkstation Messungen von Empfangssignalen durchführt und der Funkstation Übertragungsressourcen zugeteilt werden, zu einer zeitliche Kollision, dass heißt einem zeitlichen Zusammentreffen, der Durchführung der Messungen mit dem Empfang einer Nachricht möglich ist, deren Übertragung durch die Nutzung der zugeteilten Übertragungsressource ausgelöst wird. Eine solche Situation ist problematisch, da die Funkstation nicht in der Lage sein kann, gleichzeitig Messungen von Empfangssignalen durchzuführen und die genannte Nachricht zu empfangen. Die Funkstation müsste daher entweder die beabsichtigte Messung unterlassen oder sie kann die zu ihr übertragene Nachricht nicht empfangen. Es wäre zwar denkbar, die genannte Kollision zwischen durchzuführenden Messungen und zu empfangender Nachricht durch entsprechende netzseitige Koordination zu vermeiden (insbesondere bei UMTS sind netzseitig den einzelnen Teilnehmerstationen zugeteilten Messzeiträume bekannt), indem die Übertragungsressourcen einer Funkstation nur so zugeteilt werden, dass es keine zeitlichen Überschneidungen gibt. Dies würde jedoch einen äußerst großen Aufwand bedeuten oder gar unmöglich sein, insbesondere weil in bestimmten Fällen, wie bei dem EDCH nach dem UMTS-Standard, wie oben erwähnt, dieselbe Übertragungsressource gleichzeitig einer Vielzahl von Funkstationen zugeteilt werden soll, die in der Regel aber ganz unterschiedliche Messzeiträume einzuhalten haben.

Die erfindungsgemäße Lösung dagegen hat den Vorteil, dass die Zuteilung der Übertragungsressourcen zur Funkstation ohne Berücksichtigung möglicher Kollisionen (im Extremfall sogar ohne Kenntnis der von der Funkstation zu nutzende Messzeiträume) erfolgen kann und die Kollisionen dennoch vermieden werden, indem die der Funkstation bereits zugeteilte Übertragungsressource einfach nicht von dieser für die Übertragung von Daten verwendet wird. Da die Nachricht als Folge der Übertragung von Daten über die zugeteilte Übertragungsressource empfangen wird, trifft keine Nachricht an der Funkstation ein, wenn die Übertragungsressource nicht genutzt wird. In diesem Fall erfolgt also erfindungsgemäß trotz der Zuteilung der Übertragungsressource keine Kollision der von der Funkstation durchzuführenden Messung mit dem Eintreffen einer entsprechenden Nachricht.

Die Ermittlung, dass eine zeitliche Überschneidung des Messzeitraums mit dem Empfang der Nachricht droht, kann vorteilhafter Weise von der Funkstation selbst durchgeführt werden. Alternativ kann diese Ermittlung auch außerhalb der Funkstation, im Falle eines zentral organisierten Funkkommunikationssystems zum Beispiel netzseitig, erfolgen, was jedoch eine entsprechende Signalisierung an die Funkstation notwendig macht, die zugeteilte Übertragungsressource nicht für die Übertragung von Daten zu nutzen, wenn eine zeitliche Überschneidung ermittelt wurde.

Die Erfindung ist auf jedes Funkkommunikationssystem bzw. jede Funkstation anwendbar, bei dem bzw. bei der Messungen der genannten Art mit dem Empfang von Nachrichten der genannten Art zeitlich kollidieren können. Insbesondere ist die Erfindung anwendbar auf den EDCH nach dem UMTS-Standard oder vergleichbare Kanäle, für die einer Funkstation Übertragungsressourcen zuteilbar sind.

Bei den während des Messzeitraumes durch die Funkstation zu vermessenden Empfangssignalen kann es sich insbesondere um in benachbarten Funkzellen ausgesendete Signale wie beispielsweise einen Broadcast Control Channel handeln, deren Messung der Vorbereitung eines möglichen Zellwechsels der Funkstation dient.

Die im Falle der Nutzung der zugeteilten Übertragungsressource zu empfangende Nachricht kann beliebig sein. Insbesondere kommt jedoch der Fall in Betracht, bei dem die Nachricht eine Empfangsbestätigung oder eine Nichtempfangsbestätigung für die über die zugehörige Übertragungsressource übertragenen Daten ist. Dies kann beispielsweise ein Acknowlegde- oder ein Non-Acknowledge-Signal eines (H)ARQ-Verfahrens sein.

Die Funkstation kann insbesondere eine Teilnehmerstation eines Funkkommunikationssystems sein, beispielsweise eines Mobilfunksystems. Die Nachricht kann dann im Falle eines zentral organisierten Netzes von einer netzseitigen Station, beispielsweise einer Basisstation, ausgesendet werden oder im Falle eines dezentral organisierten Ad hoc-Netzes durch eine andere Teilnehmerstation des Funkkommunikationssystems.

Nach einer Weiterbildung der Erfindung führt die Funkstation während einer bestimmten Zeitspanne in mehreren zeitlich voneinander getrennten Messzeiträumen Messungen von Empfangssignalen durch, der Funkstation sind für die Zeitspanne mehrere zeitlich voneinander getrennte Übertragungsressourcen zugeteilt und die Funkstation empfängt als Folge ihrer gegebenenfalls unter Nutzung der getrennten Übertragungsressourcen durchgeführten Übertragung je eine Nachricht pro für eine Datenübertragung genutzter Übertragungsressource und die Funkstation
- nimmt keine Übertragung von Daten über eine Gruppe der Übertragungsressourcen vor, falls während der Zeitspanne eine zeitliche Überschneidung wenigstens eines der Messzeiträume mit dem Empfang wenigstens einer der Nachrichten, die einer der Übertragungsressourcen der Gruppe zugeordnet ist, droht,
- oder nimmt nur über diejenigen Übertragungsressourcen eine Übertragung von Daten vornimmt, bei denen eine zeitliche Überschneidung eines der Messzeiträume mit dem Empfang der den gegebenenfalls übertragenen Daten zugehörigen Nachricht droht.

Die erste Alternative dieser Weiterbildung bietet den Vorteil, dass nicht alle während der Zeitspanne an der Funkstation möglicherweise eintreffenden Nachrichten auf Kollisionen mit den Messzeiträumen überprüft werden müssen, sondern dass bereits bei Feststellung einer einzigen zeitlichen Kollision die Ermittlung möglicher weiterer zeitlicher Kollisionen beendet werden kann, in dem für die gesamte Gruppe von Übertragungsressourcen entschieden wird, diese nicht für eine Datenübertragung zu nutzen. Die zweite Alternative dieser Weiterbildung erfordert zwar eine einzelne Überprüfung auf mögliche Kollisionen von Nachrichten mit Messzeiträumen für jede einzelne Nachricht, hat jedoch den Vorteil, dass die zugeteilten Übertragungsressourcen soweit wie möglich ausgenutzt werden können, so dass trotz Durchführung der Messungen die Datenrate über die zugeteilten Übertragungsressourcen maximiert wird.

Eine Weiterbildung der Erfindung sieht vor, dass die Funkstation eine Signalisierung empfängt, die beeinflusst, nach welcher der beiden genannten Alternativen die Funkstation verfährt. Insbesondere kann aus der Signalisierung ein Prozentsatz oder eine Anzahl von Übertragungen mit drohender zeitlicher Überschneidung pro Zeiteinheit ableitbar sein, als Schwellwert für eine Entscheidung, nach welcher der beiden Alternativen die Funkstation verfährt. Somit kann der Funkstation extern mitgeteilt werden, in welchen Fällen sie welche der beiden Alternativen zu wählen hat.

Nach einer Weiterbildung der Erfindung sind während der Zeitspanne die Messzeiträume und die zugeteilten Übertragungsressourcen der Gruppe periodisch angeordnet, die Nachrichten stehen in einer festen zeitlichen Beziehung zu den gegebenenfalls über die zugeteilten Übertragungsressourcen übertragenen Daten und die Periode der Messzeiträume und die Periode der Übertragungsressourcen der Gruppe weichen voneinander ab. In diesem Fall wird es aufgrund der unterschiedlichen Periodizität dazu kommen, dass nur ein Teil der unter Umständen zu empfangenen Nachrichten mit einem der Messzeiträume kollidiert. Hier ist es dann sinnvoll, dass nach der oben genannten zweiten Alternative verfahren wird, also nur eine Nutzung der Übertragungsressourcen unterbleibt, wenn im Einzelfall eine Kollision mit der zugeordneten Nachricht droht.

Insbesondere kann es sich bei den Nachrichten um eine Empfangsbestätigung (Acknowledge) oder Nichtempfangsbestätigung (Non-Acknowledge) eines synchronen (H)ARQ-Verfahrens handeln.

Nach einer Ausführungsform der Erfindung empfängt die Funkstation vor dem Messzeitraum eine Signalisierung, mit der ihr die Übertragungsressource zugeteilt wird. Handelt es sich bei der Funkstation um eine Teilnehmerstation des Funkkommunikationssystems, kann die genannte Signalisierung insbesondere durch eine Basisstation des Funkkommunikationssystems erfolgen.

Nach einer Ausführungsform der Erfindung ist das Funkkommunikationssystem ein Mobilfunksystem nach einem UMTS-Standard (beispielsweise gemäß der FDD- oder TDD-Version dieses Standards), die Funkstation ist eine Teilnehmerstation, die zugeteilten Übertragungsressourcen gehören einem Uplink-Kanal an und die Signalisierung der zugeteilten Übertragungsressourcen erfolgt über einen dem Uplink-Kanal zugeordneten Zuteilungskanal.

Nach einer Weiterbildung der Erfindung empfängt die Funkstation während Empfangszeiträumen, innerhalb derer je einer der Messzeiträume angeordnet ist, Signale im so genannten compressed mode des UMTS-Standards von einer die Funkstation versorgenden netzseitigen Station.

Es kann vorteilhaft sein, wenn die Funkstation im Falle der Nichtverwendung eine der ihr zugeteilten Übertragungsressourcen wegen drohender zeitlicher Überschneidung eines Messzeitraums mit einer Nachricht eine weiter Übertragungsressource für die Übertragung von Daten anfordert. Auf diese Weise kann sicher gestellt werden, dass unbedingt von der Funkstation auszusendende Daten auch dann übertragen werden können, wenn die bereits zugeteilten Übertragungsressourcen nicht genutzt werden können, da eine zeitliche Überschneidung festgestellt wurde.

Die erfindungsgemäße Funkstation für ein Funkkommunikationssystem und deren Ausführungsformen und Weiterbildungen weisen Mittel zur Durchführung des erfindungsgemäßen Verfahrens sowie dessen Ausführungsformen und Weiterbildungen auf.

Die erfindungsgemäße Station für ein Funkkommunikationssystem weist Mittel zum Signalisieren von mehreren zeitlich voneinander getrennten, für wenigstens eine Zeitspanne einer Funkstation zugeteilten Übertragungsressourcen an die Funkstation auf, sowie Mittel zum Senden je einer Nachricht in Reaktion auf die Übertragung von Daten, die die Funkstation unter Nutzung der Übertragungsressourcen vornimmt. Ferner weist die Station Mittel zum Durchführen einer weiteren Signalisierung an die Funkstation auf, in deren Abhängigkeit die Funkstation während einer Zeitspanne
- entweder keine Übertragung von Daten über eine Gruppe der Übertragungsressourcen vornimmt, falls während der Zeitspanne eine zeitliche Überschneidung wenigstens eines von mehreren zeitlich voneinander getrennten Messzeiträumen, die für durch die Funkstation vorgesehene Messungen von Empfangssignalen vorgesehen sind, mit dem Empfang wenigstens einer der Nachrichten, die einer der Übertragungsressourcen der Gruppe zugeordnet ist, droht,
- oder nur über diejenigen Übertragungsressourcen keine Übertragung von Daten vornimmt, bei denen eine zeitliche Überschneidung eines der Messzeiträume mit dem Empfang der den gegebenenfalls übertragenen Daten zugehörigen Nachricht droht.

Die Erfindung wird im Folgenden anhand von in den Figuren dargestellten Ausführungsbeispielen näher erläutert. Es zeigen:
- Figur 1: einen Ausschnitt eines Funkkommunikationssystem mit einer Funkstation in Form einer Teilnehmerstation
und
- Figuren 2 und 3: zwei unterschiedliche Ausführungsbeispiele für Messzeiträume und die Ausnutzung von der Funkstation aus Figur 1 zugeteilten Übertragungsressourcen.

Im Folgenden wird die Erfindung anhand eines Ausführungsbeispiels erläutert, bei dem ein Funkkommunikationssystem in Form eines Mobilfunksystems nach dem UMTS-FDD-Standard betrachtet wird. Die Erfindung ist jedoch auf beliebige andere Funkkommunikationssysteme anwendbar, bei denen eine Funkstation Messungen von Empfangssignalen durchführt und es zu zeitlichen Überschneidungen des Messzeitraums mit dem Empfang einer Nachricht kommen kann, die die Funkstation als Folge ihrer unter Nutzung von zugeteilten Übertragungsressourcen durchgeführten Übertragung von Daten empfangen würde.

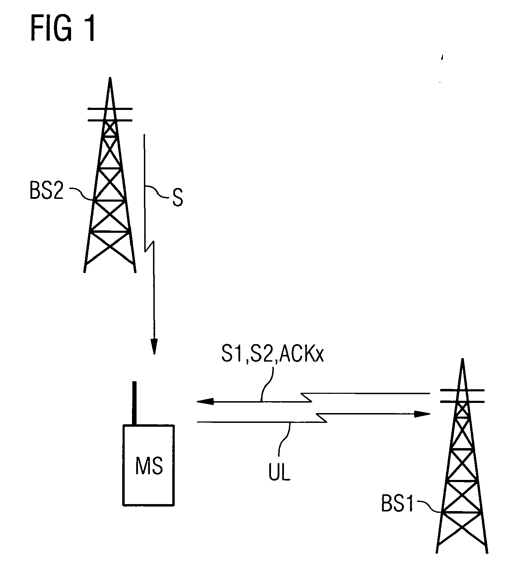

Figur 1 zeigt einen Ausschnitt eines zellularen Mobilfunksystems nach dem UMTS-FDD-Standard. Eine Funkstation in Form einer Teilnehmerstation MS befindet sich im Versorgungsbereich einer ersten Basisstation BS1. Gleichzeitig ist sie in der Lage, von einer zweiten Basisstation BS2 mit Signalen S ausgestrahlte Organisationsinformationen, die auf einem Organisationskanal (beispielsweise einem Broadcast Control Channel) ausgestrahlt werden, zu empfangen. Die Teilnehmerstation MS führt während bestimmter Messzeiträume Messungen anhand der von der zweiten Basisstation BS2 ausgesendeten Signale S sowie vergleichbarer Signale weiterer Basisstationen, die in Figur 1 nicht dargestellt sind, durch und meldet die Ergebnisse dieser Messungen auf bekannte Weise an das Mobilfunknetz. Diese Messergebnisse über die Empfangsqualität der Signale S dienen dann netzseitig beispielsweise zur Vorbereitung eines Zellwechsels der Teilnehmerstation MS von der Funkzelle der ersten Basisstation BS1 in die Funkzelle der zweiten Basisstation BS2.

Die Teilnehmerstation MS in Figur 1 ist berechtigt, über ihr zugeteilte Übertragungsressourcen auf einem Uplink-Kanal UL Daten zur ersten Basisstation BS1 zu übertragen. Bei dem Uplink-Kanal UL kann es sich beispielsweise um den für den UMTS-FDD-Standard vorgesehenen EDCH (Enhanced Dedicated Channel) handeln. Für diesen Uplink-Kanal UL signalisiert die erste Basisstation BS1 der Teilnehmerstation MS über eine entsprechende Signalisierung S2, welche Übertragungsressource oder Übertragungsressourcen der Teilnehmerstation MS vom Netz zugeteilt worden sind. Bei diesem Ausführungsbeispiel ist für den Uplink-Kanal UL ein bestimmter Spreizcode im für die Funkzelle der ersten Basisstation BS1 festgelegten Frequenzbereich vorgesehen. Über die Signalisierung S2 erfolgt nun die Mitteilung, zu welchem Zeitpunkt bzw. während welchen Zeitraums die Teilnehmerstation MS auf diesen Uplink-Kanal UL Daten zur ersten Basisstation BS1 übertragen darf. Nutzt die Teilnehmerstation MS daraufhin die ihr zugeteilte Übertragungsressource auf dem Uplink-Kanal UL und überträgt über diesen Daten zur ersten Basisstation BS1, antwortet die erste Basisstation BS1 gemäß einem synchronen HARQ-Verfahren im Falle eines erfolgreichen Empfangs der Daten durch ein Bestätigungssignal ACKx (Acknowledge). Weiterhin überträgt die erste Basisstation BS1 eine Signalisierung S1 zur Teilnehmerstation MS, auf die später noch eingegangen wird.

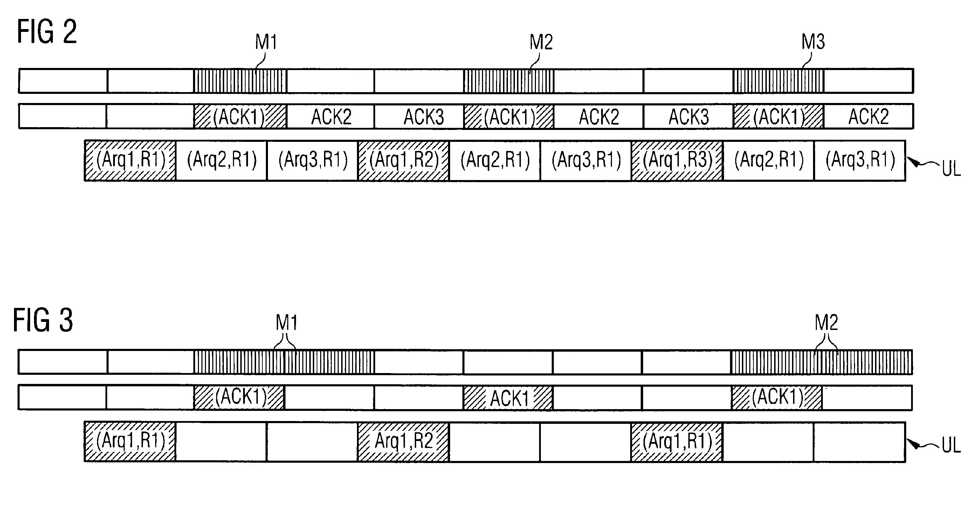

Anhand der Figuren 2 und 3 wird im Folgenden auf verschiedene Betriebszustände des Funkkommunikationssystems aus Figur 1 eingegangen.

In der jeweils ersten Zeile der Figuren 2 und 3 sind Messzeiträume M1, M2, M3 eingezeichnet, während derer die Teilnehmerstation MS Messungen anhand der von der zweiten Basisstation BS2 oder anderer Basisstationen ausgesendeten Signale S vornimmt. Der jeweils dritten Zeile der Figuren 2 und 3 ist die Übertragung von Daten durch die Teilnehmerstation MS auf ihr zugeteilten Übertragungsressourcen des Uplink-Kanals UL dargestellt. In der jeweils zweiten Zeile der Figuren 2 und 3 sind Bestätigungssignale ACK1, ACK2, ACK3 dargestellt, die die erste Basisstation BS1 als Folge des erfolgreichen Empfangs der von der Teilnehmerstation MS übertragenden Daten zur Teilnehmerstation MS überträgt.

Figur 2 zeigt für ein erstes Ausführungsbeispiel in einer vereinfachten Darstellung, dass die Teilnehmerstation MS während einer bestimmten Zeitspanne drei zeitlich getrennte Messzeiträume M1, M2, M3 zur Durchführung von Messungen der von den benachbarten Basisstationen BS2 ausgestrahlten Signale S durchführt. Der Teilnehmerstation MS sind von der ersten Basisstation BS1 über die Signalisierung S2 drei Gruppen von jeweils periodischen Übertragungsressourcen Arq1, Arq2, Arq3 zugeteilt worden. Über jede dieser Gruppen von periodischen Übertragungsressourcen überträgt die Teilnehmerstation MS nach einem synchronen HARQ-Prozess ihre Daten über den Uplink-Kanal UL. Die Periode der Übertragungsressourcen Arq1, Arq2, Arq3 stimmt bei diesem Ausführungsbeispiel mit der Periode der Messzeiträume M1, M2, M3 überein.

Der zweiten Zeile in Figur 2 ist zu entnehmen, dass die erste Basisstation BS1 aufgrund der Synchronität des verwendeten HARQ-Protokolls bei erfolgreichem Empfang der über den Uplink-Kanal UL übertragenen Daten jeweils eine entsprechende Empfangsbestätigung ACK1, ACK2, ACK3 an die Teilnehmerstation MS zurück sendet.

Die Nutzung der zugeteilten Übertragungsressourcen ist in einigen Fällen auch ohne Nutzung der Erfindung unproblematisch. Es handelt sich dabei um die Übertragungsressourcen Arq2 und Arq3, bei denen die entsprechenden Empfangsbestätigungen ACK2, ACK3 zeitlich sich nicht mit den Messzeiträumen M1, M2, M3 überschneiden.

Mit R1, R2, R3 sind in Figur 2 und 3 die Übertragungsversuche der Teilnehmerstation MS zur Übertragung derselben Datenpakete bezeichnet. R1 bedeutet dabei die jeweils erste Übertragung desselben Datenpakets, R2 die zweite Übertragung und R3 die dritte Übertragung. Gemäß des verwendeten HARQ-Protokoll wiederholt die Teilnehmerstation MS periodisch die Übertragung desselben Datenpakets, wenn sie zuvor nicht die zugehörige Empfangsbestätigung von der ersten Basisstation BS1 empfangen hat.

Da bei den Übertragungsressourcen Arq2, Arq3 in Figur 2 die Datenübertragung über den Uplink-Kanal UL erfolgreich erfolgt und auch die Empfangsbestätigungen ACK2, ACK3 jeweils erfolgreich an die Teilnehmerstation MS übermittelt werden können, erfolgt auf diesen Übertragungsressourcen Arq2, Arq3 die Aussendung jedes Datenpakets nur einfach. Bereits der erste Versuch der Datenübertragung R1 ist jeweils erfolgreich.

Anders sieht es bei der Übertragungsressource Arq1 aus, bei der es im Fall der Nutzung dieser Übertragungsressource durch die Teilnehmerstation MS für eine Übertragung über den Uplink-Kanal UL zu einer zeitlichen Überschneidung jedes der Messzeiträume M1, M2, M3 mit der Übertragung des dieser Übertragungsressource Arq1 zugeordneten Empfangsbestätigung ACK1 käme. Gemäß dem UMTS-FDD-Standard befinden sich die Teilnehmerstationen MS und die erste Basisstation BS1 während eines Zeitraums, der die Messzeiträume M1, M2, M3 einschließt, im so genannten compressed mode. Dies hat zur Folge, dass die erste Basisstation BS1 während der Messzeiträume M1, M2, M3 keine Daten zur Teilnehmerstation MS übertragen darf. Weiterhin versucht auch die Teilnehmerstation MS während der Messzeiträume auch nicht Daten von der ersten Basisstation BS1 zu empfangen. Somit unterbleibt bei diesem Ausführungsbeispiel sowohl die Aussendung der Empfangsbestätigung ACK1 durch die erste Basisstation BS1 als auch deren Empfang durch die Teilnehmerstation MS. Das Misslingen des Empfangs der Empfangsbestätigung ACK1 durch die Teilnehmerstation MS ist in den Figuren 2 und 3 durch das in Klammer Setzen des Bezugszeichen ACK1 angedeutet.

Da die Teilnehmerstation MS die Empfangsbestätigung ACK1 nicht empfangen kann, versucht sie während der nächsten Periode derselben Gruppe von Übertragungsressourcen Arq1 eine erneute Übertragung R2 desselben Datenpakets und während der übernächsten Periode macht sie einen dritten Übertragungsversuch R3. Nach dem HARQ-Prozess dieses Ausführungsbeispiels bricht die Teilnehmerstation MS nach drei Versuchen R1, R2, R3 der Übertragung derselben Daten die Übertragung über die Übertragungsressource Arq1 ab.

Bislang wurde das Verhalten der Teilnehmerstation MS für den Fall erläutert, dass die Erfindung nicht zum Einsatz kommt. Im Folgenden wird nun auf die erfindungsgemäße Lösung eingegangen.

Unter Ausnutzung der vorliegenden Erfindung nutzt die Teilnehmerstation MS aus Figur 1 beim Ausführungsbeispiel gemäß Figur 2 nicht alle ihr zugeteilten Übertragungsressourcen Arq1, Arq2, Arq3 auf dem Uplink-Kanal UL. Vielmehr ermittelt sie bereits vor den Messzeiträumen M1, M2, M3, ob eine zeitliche Überschneidung dieser Messzeiträume mit dem Empfang bzw. der Aussendung der Empfangsbestätigungen ACK1, ACK2, ACK3 droht. Ist letzteres zu bejahen, wird die entsprechende Übertragungsressource Arq1 nicht von der Teilnehmerstation MS für eine Übertragung von Daten zur ersten Basisstation BS1 genutzt. Eine Nutzung dieser Übertragungsressourcen Arq1 wäre ohnehin nicht erfolgreich und würde nur die Interferenzen im Mobilfunksystem erhöhen und andere Teilnehmerstationen, denen zeitgleich dieselben Übertragungsressourcen für einen konkurrierenden Zugriff von dem Netz zugeteilt worden sind, an einem erfolgreichen Zugriff hindern. In Figuren 2 und 3 sind Übertragungsressourcen Arq1, die aufgrund des erfindungsgemäßen Verfahrens trotz Zuteilung an die Teilnehmerstation MS von dieser nicht für eine Übertragung von Daten genutzt werden, durch in Klammern Setzen gekennzeichnet.

Figur 3 zeigt ein alternatives Ausführungsbeispiel, bei dem während der bestimmten Zeitspanne lediglich zwei Messzeiträume M1, M2, jedoch mit doppelter Länge im Vergleich zu Figur 2, vorgesehen sind. Gemäß der dritten Zeile in Figur 3 sind der Teilnehmerstation MS über die Signalisierung S2 Übertragungsressourcen Arq1 zugeordnet worden, die periodisch zueinander angeordnet sind.

Zunächst wird wieder der Fall betrachtet, dass die Teilnehmerstation MS (ohne dass die Erfindung verwendet wird) jede der zugeteilten Übertragungsressourcen Arq1 auf dem Uplink-Kanal UL für eine Datenübertragung nutzt. Der erste Übertragungsversuch R1 ist nicht erfolgreich, da es wiederum zu einer zeitlichen Kollision zwischen dem ersten Messzeitraum M1 und der entsprechenden Empfangsbestätigung ACK1 kommt, weshalb die erste Basisstation BS1 die Empfangsbestätigung ACK1 nicht aussendet und diese entsprechend nicht von der Teilnehmerstation MS empfangen werden kann. Daher versucht die Teilnehmerstation MS während der nächsten Periode der Übertragungsressourcen Arq1, dieselben Daten erneut zu übertragen R2. Daraufhin kann die Empfangsbestätigung ACK1 erfolgreich empfangen werden. Bei der dritten Periode der Übertragungsressourcen Arq1 erfolgt der erste Versuch R1 der Übertragung von neuen Daten durch die Teilnehmerstation MS. Auch hier ist keine Übermittlung der zugehörigen Empfangsbestätigung ACK1 möglich, so dass die Teilnehmerstation MS die Übertragung wiederum als gescheitert ansieht und einen erneuten Übertragungsversuch starten muss (in Figur 3 nicht dargestellt).

Gemäß der Erfindung wird bei diesem Ausführungsbeispiel nun wiederum im Vorhinein von der Teilnehmerstation MS ermittelt, ob bei der Nutzung einer bestimmten Übertragungsressource Arq1 eine zeitliche Überschneidung der Messzeiträume M1, M2 mit den zu empfangenden Empfangsbestätigungen ACK1 eintreten könnte. Im in Figur 3 dargestellten Fall erkennt die Teilnehmerstation MS die zeitliche Kollision für die erste und die dritte Periode der Übertragungsressourcen Arq1, wohingegen für die zweite Periode keine Kollision ermittelt wird. Daraufhin unterlässt die Teilnehmerstation MS analog zum Ausführungsbeispiel aus Figur 2 eine Übertragung von Daten über diejenigen Übertragungsressourcen Arq1, für die sie zuvor eine zeitliche Kollision der Messzeiträume M1, M2 mit den Empfangsbestätigungen ACK1 ermittelt hat, und nutzt dementsprechend nur die zweite Periode für eine Datenübertragung. Die nicht von der Teilnehmerstation MS verwendeten, ihr aber zugeteilten Übertragungsressourcen Arq1 sind in Figur 3 wiederum durch in Klammern Setzen gekennzeichnet.

Bei den Ausführungsbeispielen gemäß den Figuren 2 und 3 hat die Teilnehmerstation MS für jede Übertragungsressource Arq1, Arq2, Arq3 separat ermittelt, ob eine zeitliche Überschneidung der Empfangsbestätigungen ACK1, ACK2, ACK3 mit den Messzeiträumen M1, M2, M3 möglich ist. Dementsprechend kann sie für jede Übertragungsressource individuell entscheiden, ob sie diese für eine Datenübertragung nutzt (nämlich, wenn keine zeitliche Überschneidung droht) oder nicht.

Bei alternativen Ausführungsbeispielen ist es jedoch auch möglich, dass die Teilnehmerstation MS aus einer Gruppe von Übertragungsressourcen nur einzelne auf die genannte zeitliche Überschneidung bzw. Kollision hin untersucht und bei Feststellen der Kollision für nur eine der Übertragungsressourcen der Gruppe eine Übertragung von Daten über alle Übertragungsressourcen der Gruppe unterlässt. Dies würde beispielsweise in Abwandlung des Ausführungsbeispiels aus Figur 3 bedeuten, dass die Teilnehmerstation MS auch keine Übertragung von Daten über die zweite Periode der Übertragungsressourcen Arq1 durchführt, sofern sie (wie bei Figur 3 der Fall) bei der ersten oder dritten Periode der Übertragungsressourcen Arq1 eine Kollision festgestellt hat, wenn die drei Perioden Übertragungsressourcen Arq1 in Figur 3 als Gruppe von Übertragungsressourcen im oben genannten Sinne verstanden werden.

Ein solches Vorgehen kann insbesondere dann sinnvoll sein, wenn eine gewisse Mindestdatenrate für eine Übertragung von Daten über den Uplink-Kanal UL für jede Teilnehmerstation MS gewährleistet werden soll. Wenn wie beim Ausführungsbeispiel gemäß Figur 3 gezeigt, nur eine von drei Übertragungsressourcen Arq1 genutzt werden kann, reduziert sich die während einer Zeitspanne mögliche Datenrate auf ein Drittel. Falls dies nicht erwünscht ist, kann durch die Signalisierung S1 der ersten Basisstation BS1 der Teilnehmerstation MS mitgeteilt werden, in welchen Fällen nur manche der Übertragungsressourcen der Gruppe genutzt werden dürfen und in welchen Fällen gar keine, sofern es zumindest für einige Übertragungsressourcen der Gruppe zu Kollisionen kommen könnte. Diese Signalisierung S1 kann beispielsweise dazu dienen, der Teilnehmerstation MS einen Prozentsatz oder eine Anzahl von Übertragungen mit drohender zeitlicher Überschneidung pro Zeiteinheit mitzuteilen, die von der Teilnehmerstation MS als Schwellwert für eine Entscheidung verwendet wird, ob im Falle von festgestellten Kollisionen über diejenigen Übertragungsressourcen der Gruppe, für die keine Kollisionen zu befürchten sind, übertragen werden darf oder nicht.

Nach einem Ausführungsbeispiel übermittelt die erste Basisstation BS1 beispielsweise über die Signalisierung S1 an die Teilnehmerstation MS die Mitteilung, dass die Übertragungsressourcen Arq1 aus Figur 3 nur für eine Datenübertragung genutzt werden sollen, wenn wenigstens ein Drittel dieser Ressourcen während einer bestimmten Zeitspanne ohne Kollision der zugehörigen Empfangsbestätigungen ACK1 mit den Messzeiträumen M1, M2 genutzt werden können. Diese Voraussetzung wäre beim in Figur 3 gezeigten Ausführungsbeispiel erfüllt.

Bei einem anderen Ausführungsbeispiel würde die erste Basisstation BS1 über die Signalisierung S1 einen Mindestwert von zwei Drittel der Übertragungsressourcen Arq1 fordern. Da dies gemäß Figur 3 nicht gewährleistet ist (nur eine von drei Übertragungsressourcen kann erfolgreich benutzt werden), würde die Teilnehmerstation MS im letztgenannten Fall (und in Abweichung von Figur 3) keine der drei Übertragungsressourcen Arq1 aus Figur 3 nutzen.

Reichen die ihr über die Signalisierung S2 zugeteilten Übertragungsressourcen der Teilnehmerstation MS nicht für zu übertragende Daten aus, da die Teilnehmerstation MS feststellt, dass wenigstens eine der ihr zugeteilten Übertragungsressourcen aufgrund drohender zeitlicher Kollision nicht genutzt werden kann, fordert die Teilnehmerstation MS die Zuteilung weiterer dedizierter Übertragungsressourcen (die nicht auf dem Uplink-Kanal UL liegen müssen und daher einen anderen Spreizcode zugeordnet haben können) bei der ersten Basisstation BS1 an. Dies ist insbesondere erforderlich, wenn die Periode der Messzeiträume M1, M2, M3 und die der Übertragungsressourcen Arq1, die von einer Kollision betroffen sind, übereinstimmt, so dass mit einer großen Zahl von Kollisionen zu rechnen ist. Der Zeitpunkt für das Beantragen einer weiteren Ressourcenzuteilung hängt dabei von der Dringlichkeit einer Übertragung und der Anzahl zu übertragender Daten ab, für die spezielle Schwellwerte vorgesehen werden können.

Zusätzlich oder auch als von der vorstehend erläuterten Erfindung völlig unabhängige Erfindung kann es vorgesehen sein, dass jeweils mehrere Teilnehmerstationen zu Gruppen zusammengefasst werden, denen über die Signalisierung S2 der ersten Basisstation BS1 jeweils dieselben Übertragungsressourcen zugewiesen werden. Dabei wird netzseitig eine Einteilung der Teilnehmerstationen in die Gruppen vorgenommen, wobei als Einteilungskriterium berücksichtigt wird, dass es zu möglichst wenig zeitlichen Kollisionen von Messzeiträumen mit Bestätigungssignalen für die Teilnehmerstationen jeder Gruppe für die der jeweiligen Gruppe zugeteilten Übertragungsressourcen kommt.

Die Zuteilung der Teilnehmerstationen zu solchen Gruppen kann dabei dynamisch erfolgen, so dass auf Veränderungen bei der zeitlichen Lage der zugeteilten Übertragungsressourcen und Messzeiträume reagiert werden kann. Ziel dabei ist es, die Anzahl von erfolgreich genutzten Übertragungsressourcen zu maximieren.

## Patentansprüche

1. Verfahren zum Betrieb einer Funkstation für ein Funkkommunikationssystem, bei dem
- eine Funkstation (MS) während eines festgelegten Messzeitraumes (M1) Messungen von Empfangssignalen durchführt,
- der Funkstation (MS) eine Übertragungsressource (Arq1) für auszusendende Daten zugeteilt ist
- und die Funkstation (MS) eine Übertragung von Daten über die Übertragungsressource (Arq1) unterlässt, falls eine zeitliche Überschneidung des Messzeitraums (M1) mit dem Empfang einer Nachricht (ACK1) droht, die die Funkstation (MS) als Folge ihrer unter Nutzung der Übertragungsressource (Arq1) durchgeführten Übertragung von Daten empfangen würde.

2. Verfahren nach Anspruch 1, bei dem
- die Funkstation während einer Zeitspanne in mehreren zeitlich voneinander getrennten Messzeiträumen (M1, M2, M3) Messungen von Empfangssignalen durchführt,
- der Funkstation für die Zeitspanne mehrere zeitlich voneinander getrennte Übertragungsressourcen (Arq1, Arq2, Arq3) zugeteilt sind,
- die Funkstation als Folge ihrer gegebenenfalls unter Nutzung der getrennten Übertragungsressourcen (Arq1, Arq2, Arq3) durchgeführten Übertragung je eine Nachricht (ACK1, ACK2, ACK3) pro für eine Datenübertragung genutzter Übertragungsressource empfängt
- und die Funkstation (MS) während der Zeitspanne
- entweder keine Übertragung von Daten über eine Gruppe der Übertragungsressourcen (Arq1) vornimmt, falls während der Zeitspanne eine zeitliche Überschneidung wenigstens eines der Messzeiträume (M1, M2, M3) mit dem Empfang wenigstens einer der Nachrichten (ACK1), die einer der Übertragungsressourcen (Arq1) der Gruppe zugeordnet ist, droht,
- oder nur über diejenigen Übertragungsressourcen (Arq1, Arq2, Arq3) keine Übertragung von Daten vornimmt, bei denen eine zeitliche Überschneidung eines der Messzeiträume (M1, M2, M3) mit dem Empfang der den gegebenenfalls übertragenen Daten zugehörigen Nachricht (ACK1) droht.

3. Verfahren nach Anspruch 2, bei dem
die Funkstation (MS) eine Signalisierung (S1) empfängt, die beeinflusst, nach welcher der beiden Alternativen aus Anspruch 2 die Funkstation verfährt.

4. Verfahren nach Anspruch 3, bei dem
aus der Signalisierung (S1) ein Prozentsatz oder eine Anzahl von Übertragungen mit drohender zeitlicher Überschneidung pro Zeiteinheit ableitbar ist, als Schwellwert für eine Entscheidung, nach welcher der beiden Alternativen aus Anspruch 2 die Funkstation verfährt.

5. Verfahren nach einem der Ansprüche 2 bis 4, bei dem
- während der Zeitspanne die Messzeiträume (M1, M2, M3) und die zugeteilten Übertragungsressourcen (Arq1) der Gruppe periodisch angeordnet sind,
- die Nachrichten in einer festen zeitlichen Beziehung zu den gegebenenfalls über die zugeteilten Übertragungsressourcen (Arq1, Arq2, Arq3) übertragenen Daten stehen
- und die Periode der Messzeiträume (M1, M2, M3) und die Periode der Übertragungsressourcen (Arq1) der Gruppe_voneinander abweichen.

6. Verfahren nach einem der vorstehenden Ansprüche, bei dem die Nachricht (ACK1) eine Empfangsbestätigung oder eine Nichtempfangsbestätigung für die über die zugehörige Übertragungsressource (Arq1) übertragenen Daten ist.

7. Verfahren nach einem der vorstehenden Ansprüche, bei dem die Funkstation (MS) vor dem Messzeitraum (M1) eine Signalisierung (S2) empfängt, mit der ihr die Übertragungsressource (Arq1) zugeteilt wird.

8. Verfahren nach Anspruch 7, bei dem
- das Funkkommunikationssystem ein Mobilfunksystem nach einem UMTS-Standard ist,
- die Funkstation (MS) eine Teilnehmerstation ist,
- die zugeteilten Übertragungsressourcen (Arql, Arq2, Arq3) einem Uplink-Kanal (EDCH) angehören
- und die Signalisierung (S2) der zugeteilten Übertragungsressourcen über einen Zuteilungskanal erfolgt.

9. Verfahren nach einem der vorstehenden Ansprüche, bei dem die Funkstation (MS) während Empfangszeiträumen, innerhalb derer je einer der Messzeiträume (M1, M2, M3) angeordnet ist, Signale im so genannten compressed mode des UMTS-Standards von einer die Funkstation versorgenden netzseitigen Station (BS) empfängt.

10. Verfahren nach einem der vorstehenden Ansprüche, bei dem die Funkstation (MS) im Falle der Nichtverwendung einer der ihr zugeteilten Übertragungsressourcen (Arql, Arq2, Arq3) wegen drohender zeitlicher Überschneidung eines Messzeitraums (M1, M2, M3) mit einer Nachricht eine weitere Übertragungsressource für die Übertragung von Daten anfordert.

11. Funkstation (MS) für ein Funkkommunikationssystem
- mit Mitteln zum Durchführen von Messungen von Empfangssignalen während eines festgelegten Messzeitraumes (M1),
- mit Mitteln zum Senden von Daten auf einer der Funkstation (MS) zugeteilten Übertragungsressource (Arq1),
- deren Mittel zum Senden so ausgestaltet sind, dass sie eine Übertragung von Daten über die Übertragungsressource (Arq1) unterlassen, falls eine zeitliche Überschneidung des Messzeitraums (M1) mit dem Empfang einer Nachricht (ACK1) droht, die die Funkstation (MS) als Folge ihrer unter Nutzung der Übertragungsressource (Arq1) durchgeführten Übertragung von Daten empfangen würde.

12. Station (BS1) für ein Funkkommunikationssystem
- mit Mitteln zum Signalisieren (S2) von mehreren zeitlich voneinander getrennten, für wenigstens eine Zeitspanne einer Funkstation (MS) zugeteilten Übertragungsressourcen (Arql, Arq2, Arq3) an die Funkstation,
- mit Mitteln zum Senden je einer Nachricht (ACK1, ACK2, ACK3) in Reaktion auf die Übertragung von Daten, die die Funkstation (MS) unter Nutzung der Übertragungsressourcen (Arql, Arq2, Arq3) vornimmt,
- und mit Mitteln zum Durchführen einer weiteren Signalisierung (S1) an die Funkstation (MS), in deren Abhängigkeit die Funkstation während einer Zeitspanne
- entweder keine Übertragung von Daten über eine Gruppe der Übertragungsressourcen (Arq1) vornimmt, falls während der Zeitspanne eine zeitliche Überschneidung wenigstens eines von mehreren zeitlich voneinander getrennten Messzeiträumen (M1, M2, M3), die für durch die Funkstation vorgesehene Messungen von Empfangssignalen vorgesehen sind, mit dem Empfang wenigstens einer der Nachrichten (ACK1), die einer der Übertragungsressourcen (Arq1) der Gruppe zugeordnet ist, droht,
- oder nur über diejenigen Übertragungsressourcen (Arq1) keine Übertragung von Daten vornimmt, bei denen eine zeitliche Überschneidung eines der Messzeiträume (M1, M2, M3) mit dem Empfang der den gegebenenfalls übertragenen Daten zugehörigen Nachricht (ACK1) droht.
